# EUROPÄISCHE PATENTSCHRIFT

(11) **EP 1 452 788 B1**
(45) Veröffentlichungstag und Bekanntmachung des Hinweises auf die Patenterteilung: **08.11.2006**
(21) Anmeldenummer: 04004173.3
(22) Anmeldetag: 25.02.2004
(51) Int. Cl.: F16L 3/12

(54) **Klemmschelle**
Clamp
Collier de serrage

(30) Priorität: 26.02.2003 DE 10308125
(43) Veröffentlichungstag der Anmeldung: 01.09.2004
(73) Patentinhaber: RANIT-Befestigungssysteme GmbH, 45701 Herten (DE)
(72) Erfinder: Gräwe, Bernd, 45701 Herten (DE)
(74) Vertreter: Valentin, Ekkehard

(56) Entgegenhaltungen:
- DE-A- 3 014 578
- US-A- 4 955 574

## Beschreibung

Die Erfindung betrifft eine Klemmschelle zur Halterung von Langformteilen wie Rohren, Kabeln oder Schläuchen, bestehend aus einem Basissockel und daran an zwei Seiten einander gegenüberliegend auf hochragenden Sockelstegen schwenkbeweglich befestigten, zweiarmigen Schellenbügeln, deren oberen Bügelarme mit beim Einlegen eines Langformteiles selbsttätig ineinandergreifenden Rastmitteln ausgebildet sind.

Eine einstückig aus Kunststoff bestehende Klemm- bzw. Rohrschelle dieser Art ist durch die DE 27 08 292 C3 bekanntgeworden. Das Rohr ist dort zwischen zwei an dem Basissockel bzw. Halteteil angebrachten Schellenbügeln (Bridensegmenten) einklemmbar. Die Schellenbügel besitzen dazu an ihrem von dem Basissockel abgewandten, oberen Bügelarmen Verschlußteile in Form einer aus zwei gegeneinander gerichteten Haken bestehenden Rastvorrichtung, über die die Schellenbügel miteinander durch Schnappverschluß formschlüssig verbindbar sind. Die Schellenbügel sind zweiarmig ausgebildet und zwischen dem oberen und dem unteren Bügelarm über ein dünnes Gelenk, z.B. ein Filmscharnier, an jeweils den hochragenden Sockelstegen oder dergleichen angelenkt. Wenn ein Rohr zwischen die geöffneten Schellenbügel eingeführt und in Richtung auf den Basissokkel gedrückt wird, so kommt es an den als kürzere Hebelarme ausgebildeten unteren Bügelarmen der Schellenbügel zur Wirkung, die sich nämlich zangenartig in Richtung auf ihre Schließlage, d.h. aufeinander zu bewegen. Bei größer werdendem Druck auf das Rohr schieben sich die Rasthaken der oberen Bügelarme aneinander vorbei, bis sie sich ineinander verhaken.

Wenngleich damit ein sicherer Rasteingriff vorliegt, der ein Aufspringen des Verschlusses unter der Wirkung von auf das Rohr ausgeübten Querkräften innerhalb der durch die Zerreißfestigkeit des Materials gesetzten Grenze ausgeschlossen ist, so hat sich doch gezeigt, daß das Gelenk bzw. das Filmscharnier einen Schwachpunkt darstellt. Dieses reißt nämlich häufig ab, zumal bei wiederholtem Gebrauch der Klemmschelle zur Halterung eines Rohres.

Der Erfindung liegt daher die Aufgabe zugrunde, die Betriebssicherheit einer gattungsgemäßen Klemmschelle zu verbessern, insbesondere die Gefahr des Abreißens des Gelenks der zweiarmigen Bügelschellen zu verringern.

Diese Aufgabe wird erfindungsgemäß dadurch gelöst, daß an den unteren Bügel armen und in deren Schwenkweg liegend an den Sockelstegen Rastmittel vorgesehen sind. Wenn diese durch das eingedrückte Rohr, Kabel, Schlauch oder dergleichen - nachfolgend der Einfachheit halber Rohr genannt - in ihre Rastverbindung gebracht worden sind, wird nicht nur die Verschlußhalterung des Rohres durch die damit erreichte doppelte bzw. Mehrpunkt-Verrastung, nämlich oben und unten, erhöht, sondem insbesondere das Gelenk zwischen den Schellenbügeln und den hochragenden Sockelstegen oder dergleichen in der Folge von jeglicher Beanspruchung entlastet. Die Standzeit der Klemmschelle und deren Anwendungshäufigkeit werden damit deutlich erhöht, weil die Gelenkanbindung bei weitem nicht mehr so gefährdet ist wie ohne eine erfindungsgemäße untere Rastsicherung, die ein Bewegungsspiel während der Rasthalterung des Rohres völlig ausschließt.

Eine Ausführung der Erfindung sieht vor, daß an den unteren Bügelarmen und an den Sockelstegen als Rastmittel einander verhakend eingreifende Rastnasen ausgebildet sind. Diese legen sich in der Verschlußlage übereinander, wobei die Rastnasen der Bügelarme die Rastnasen an den Sockelstegen untergreifen. Dieser Rastsitz läßt sich vorteilhaft weiterhin dadurch unterstützen, daß die beim Rasteingriff aufeinander liegenden Flächen der komplementären Rastnasen mit einem Hinterschnitt versehen sind.

Nach einer anderen Ausführung der Erfindung sind an den unteren Bügelarmen und an den Sockelstegen als Rastmittel ineinander greifende Verzahnungen vorgesehen. Diese begünstigen aufgrund eines vielfachen Eingriffs von tragenden Zahnflanken eine noch sicherere, spielfreie Rastverbindung.

Wenn die oberen Bügelarme vorteilhaft als sichelartige Zahnstangenabschnitte ausgebildet sind, die in der Halterungsfunktion einander überlappen, wird einerseits der obere Rastverschluß stabiler, andererseits ergibt sich in einfacher Weise eine Anpassung an unterschiedliche Durchmesser von einzulegenden Rohren.

Weitere Einzelheiten und Merkmale der Erfindung ergeben sich aus den Ansprüchen und der nachfolgenden Beschreibung von in den Zeichnungen dargestellten Ausführungsbeispielen der Erfindung. Es zeigen:
- Fig. 1: eine Klemmschelle mit zwischen deren geöffneten Schellenbügeln eingelegtem Rohr, von vorne in Längsrichtung des Rohres gesehen;
- Fig. 2: die Klemmschelle nach Fig. 1 in ihrer Schließstellung;
- Fig. 3: eine andere Ausführung einer Klemmschelle mit zwischen den geöffneten Schellenbügeln eingelegtem Rohr, von vorne in Längsrichtung des Rohres gesehen; und
- Fig. 4: die Klemmschelle nach Fig. 3 in ihrer Schließlage.

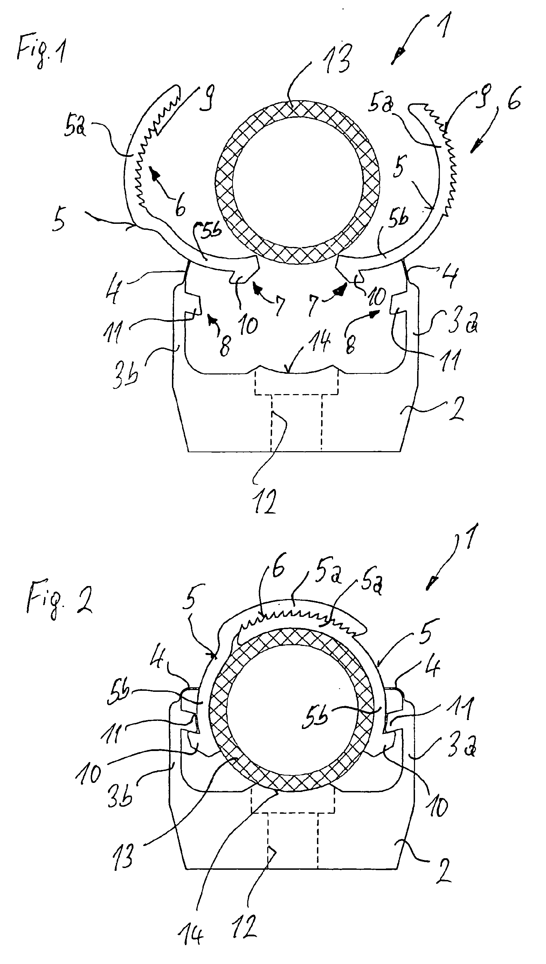

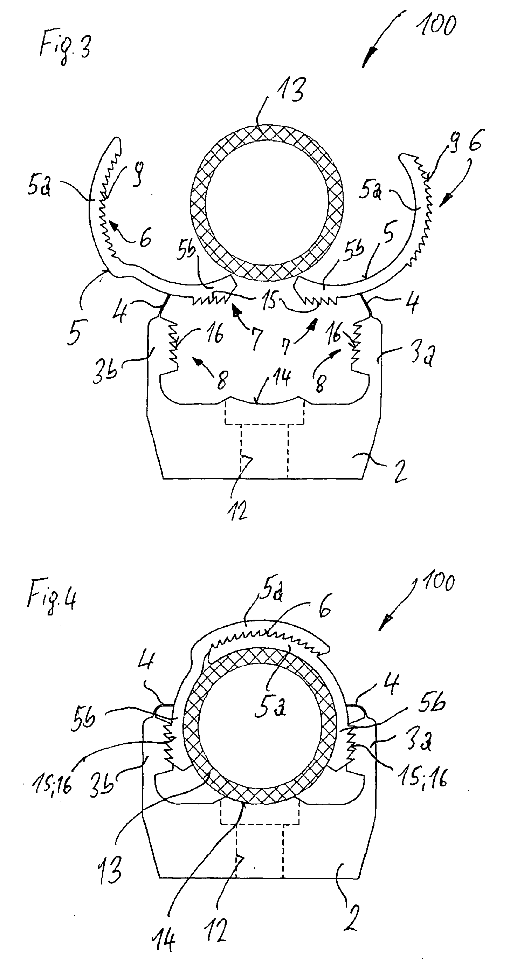

Eine in den Fig. 1 und 2 dargestellte Klemmschelle 1 besteht aus einem Basissokkel 2, der an zwei einander gegenüberliegenden Seiten hochragende Sockelstege 3a, 3b besitzt. An diesen sind über ein Filmschamier bzw. Gelenk 4 schwenkbeweglich zweiarmige Schellenbügel 5 befestigt. Sowohl die oberen Bügelarme 5a als auch die unteren Bügelarme 5b sind mit Rastmitteln 6 bzw. 7 ausgebildet, wobei dem Rastmittel 7 der unteren Bügelarme 5b an den oberen Enden der Sockelstege 3a, 3b ein komplementäres Gegenrastmittel 8 zugeordnet ist. Diese Rastmittel sind bei der Klemmschelle 1 nach den Fig. 1 und 2 an den oberen Bügelformen 5a als sichelartige Zahnstangenabschnitte 9 einmal außen und einmal innen bzw. als Rastnasen 10 an den unteren Bügelarmen 5b sowie Rastnasen 11 innen an den Sockelstegen 3a, 3b ausgeführt. Zum Befestigen der Klemmschelle 1 an einem Montageuntergrund weist der Basissockel 2 eine Durchstecköffnung 12, z.B. für eine Schraube, auf.

Ein gemäß Fig. 1 zwischen die geöffneten Schellenbügel 5 auf die unteren Bügelarme 5b eingelegtes Rohr 13 wird zur Halterung in der Klemmschelle 1 nach unten in Richtung auf den Basissockel 2 gedrückt, wobei die Schellenbügel 5 um ihre Gelenke 4 gegenläufig zunehmend mehr verschwenkt werden, bis sie in der in Fig. 2 gezeigten Schließlage das bis auf einen Sockelaufsatz 14 aufgedrückte Rohr 13 formschlüssig umschließen. In der Schließlage sind einerseits die einander überlappenden Zahnstangenabschnitte 9 der oberen Bügelarme 5a und andererseits die Rastnasen 10 der unteren Bügelarme 5b mit den Rastnasen 11 der Sockelstege 3a bzw. 3b verrastet. Es liegt damit eine Verrastung an drei Umfangsstellen des Rohres 13 vor, nämlich oben und außerdem unten an zwei gegenüberliegenden Seiten, so daß das Rohr 13 lagesicher in seinem Sockelaufsatz 14 gehalten wird. Die Gelenke 4 werden somit während der Rohrhalterung entlastet und unterliegen keinem Bewegungsspiel.

Die in den Fig. 3 und 4 dargestellte Klemmschelle 100 unterscheidet sich bei unveränderter Funktion von der vorbeschriebenen Ausführung lediglich durch eine andere Ausbildung der Rastmittel 7 an den unteren Bügelarmen 5b und der diesen in ihrem Schwenkweg an den Sockelstegen 3a, 3b zugeordneten Gegenrastmittel 8. Die bei beiden Ausführungen übereinstimmenden Bauteile sind daher mit denselben Bezugsziffern versehen, selbst wenn diese hier nicht noch einmal erwähnt werden.

Statt mit Rastnasen sind nach den Fig. 3 und 4 die unteren Bügelarme 5b und die Sockelstege 3a bzw. 3b mit Verzahnungen 15 bzw. 16 ausgebildet. Der somit in allen Rastbereichen sägezahnartige Ineinandergriff begünstigt die Verschlußsicherung in der Schließlage (vgl. Fig. 4), ermöglicht bei Durchmesserunterschieden des eingelegten Rohres 14 zudem einen entsprechend gestuften Rasteingriff sowohl im Bereich der oberen Bügelarme 5a als auch im Zusammenspiel mit den Verzahnungen 16 der Sockelstege 3a bzw. 3b im Bereich der unteren Bügelarme 5b. In jedem Fall werden auch hier die Gelenke 4 der Schellenbügel 5 außer bei der Schwenkbewegung nicht mehr beansprucht.

## Patentansprüche

1. Klemmschelle (1; 100) zur Halterung von Langformteilen (13) wie Rohren, Kabeln oder Schläuchen, bestehend aus einem Basissockel (2) und daran an zwei Seiten einander gegenüberliegend auf hochragenden Sockelstegen (3 a, 3 b) schwenkbeweglich befestigten, zweiarmigen Schellenbügeln (5), deren oberen Bügelarme (5 a) mit beim Einlegen eines Langformteiles (13) selbsttätig ineinandergreifenden Rastmitteln ausgebildet sind,
**dadurch gekennzeichnet,**
**daß** an den unteren Bügelarmen (5b) und in deren Schwenkweg liegend an den Sockelstegen (3a, 3b) Rastmittel (7; 8) vorgesehen sind.

2. Klemmschelle nach Anspruch 1,
**dadurch gekennzeichnet,**
**daß** an den unteren Bügelarmen (5b) und an den Sockelstegen (3a, 3b) als Rastmittel (7 bzw. 8) einander verhakend eingreifende Rastnasen (10 bzw.11) ausgebildet sind.

3. Klemmschelle nach Anspruch 2,
**dadurch gekennzeichnet,**
**daß** die beim Rasteingriff aufeinander liegenden Flächen der komplementären Rastnasen (10 bzw. 11) hinterschnitten sind.

4. Klemmschelle nach Anspruch 1,
**dadurch gekennzeichnet,**
**daß** an den unteren Bügelarmen (5b) und an den Sockelstegen (3a, 3b) als Rastmittel (7 bzw. 8) ineinander greifende Verzahnungen (15 bzw. 16) vorgesehen sind.

5. Klemmschelle nach einem der Ansprüche 1 bis 4,
**dadurch gekennzeichnet,**
**daß** die oberen Bügelarme (5a) als sichelartige Zahnstangenabschnitte (9) ausgebildet sind, die in der Halterungsfunktion einander überlappen.

## Claims

1. A clamp (1; 100) for mounting oblong parts (13) such as tubes, cables or hoses, consisting of a base (2) and two-armed clips (5) that are oppositely fixed thereon on two sides in a pivoted fashion on upwardly protruding webs (3 a, 3 b), wherein the upper clip arms (5 a) of said clips are realized with interlocking means that automatically interlock when an oblong part (13) is inserted,
**characterized in**
**that** interlocking means (7; 8) are provided on the lower clip arms (5b), as well as on the webs (3a, 3b) in the pivoting path of the lower clip arms.

2. The clamp according to claim 1,
**characterized in**
**that** interlocking means (7 and 8) in the form of interlocking notches (10 and 11) are respectively provided on the lower clip arms (5b) and on the webs (3a, 3b).

3. The clamp according to claim 2,
**characterized in**
**that** the surfaces of the complementary notches (10 and 11) that lie on one another in the engaged state thereof are undercut.

4. The clamp according to claim 1,
**characterized in**
**that** interlocking means (7 and 8) in the form of interlocking teeth (15 and 16) are respectively provided on the lower clip arms (5b) and on the webs (3a, 3b).

5. The clamp according to one of claims 1 to 4,
**characterized in**
**that** the upper clip arms (5a) are realized in the form of sickle-like rack sections (9) that overlap one another in the mounting function.

## Revendications

1. Collier de serrage (1 ; 100) pour la fixation de pièces formées allongées (13) comme des tubes, des câbles ou des tuyaux, composé d'un socle de base (2) et de brides de collier (5) à deux bras fixées dessus de deux côtés face à face de manière pivotable sur des traverses proéminentes du socle (3a, 3b) et dont les bras de brides supérieurs (5a) sont réalisés avec des moyens d'enclenchement s'engrenant automatiquement les uns dans les autres lors de l'insertion d'une pièce formée allongée (13),
**caractérisé en ce que**,
au niveau des bras de brides inférieurs (5b) et dans leur trajet de pivotement, sur les traverses du socle (3a, 3b), sont prévus des moyens d'enclenchement (7 ; 8).

2. Collier de serrage selon la revendication 1,
**caractérisé en ce que**,
au niveau des bras de brides inférieurs (5b) et des traverses du socle (3a, 3b) sont formés des becs d'enclenchement (10 ou 11) s'engrenant les uns dans les autres par accrochage et servant de moyens d'enclenchement (7 ou 8).

3. Collier de serrage selon la revendication 2,
**caractérisé en ce que**
les surfaces superposées lors de l'engrènement par enclenchement des becs d'enclenchement complémentaire (10, 11) sont découpées à l'arrière.

4. Collier de serrage selon la revendication 1,
**caractérisé en ce que**,
au niveau des bras de brides inférieurs (5b) et des traverses du socle (3a, 3b), il est prévu comme moyens d'enclenchement (7 ou 8) des dents (15 ou 16) s'engrenant les unes dans les autres.

5. Collier de serrage selon une des revendications 1 à 4,
**caractérisé en ce que**
les bras de brides supérieurs (5a) sont réalisés sous forme de sections de crémaillère en forme de faucilles (9) se chevauchant en position de fixation.
